(19) Europäisches Patentamt
European Patent Office
Office européen des brevets

(11) **EP 4 342 574 A2**

(12) **DEMANDE DE BREVET EUROPEEN**

(43) Date de publication:
**27.03.2024 Bulletin 2024/13**

(51) Classification Internationale des Brevets (IPC):
**B01D 65/10** *(2006.01)*

(21) Numéro de dépôt: 23198129.1

(52) Classification Coopérative des Brevets (CPC):
**B01D 65/109;** B01D 2321/02; B01D 2321/04;
B01D 2321/10; B01D 2321/20; B01D 2321/2083

(22) Date de dépôt: **19.09.2023**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **22.09.2022 FR 2209615**

(71) Demandeur: **Bucher Vaslin**
**49290 Chalonnes sur Loire (FR)**

(72) Inventeurs:
• **DOBROWOLSKI, Eric**
**49290 CHALONNES-SUR-LOIRE (FR)**
• **TCACIUC, Eugène**
**49290 CHALONNES-SUR-LOIRE (FR)**
• **PASQUET, Jérémy**
**49290 CHALONNES-SUR-LOIRE (FR)**

(74) Mandataire: **Ipsilon**
**Europarc - Bat B7**
**3, rue Edouard Nignon**
**44300 Nantes (FR)**

(54) **PROCEDE DE GESTION DU COLMATAGE DE MEMBRANE D'UN DISPOSITIF DE FILTRATION TANGENTIELLE**

(57) L'invention concerne un procédé de gestion du colmatage d'une membrane (3) d'un dispositif de filtration tangentiel d'un fluide, notamment du vin. L'invention concerne également le dispositif de filtration tangentielle pour la mise en oeuvre de ce procédé, ainsi qu'un procédé de détermination de la vitesse tangentielle de fluide dans une membrane (3) afin de limiter le colmatage de celle-ci.

Fig. 1

**EP 4 342 574 A2**

**Description**

L'invention se rapporte à un procédé de gestion du colmatage d'une membrane d'un dispositif de filtration tangentielle d'un fluide, notamment du vin. L'invention concerne également le dispositif de filtration tangentielle pour la mise en oeuvre de ce procédé, ainsi qu'un procédé de détermination de la vitesse tangentielle de fluide dans une membrane afin de limiter le colmatage de celle-ci.

L'invention concerne le domaine de la fabrication des installations pour le traitement d'un fluide, plus particulièrement pour la filtration d'un fluide contenant des particules en suspension responsables du trouble de ce fluide, tel que du vin.

Un tel moyen de filtration se présente, usuellement, sous la forme d'un carter recevant, intérieurement, au moins une membrane (voire, et de préférence, une pluralité de membranes) à l'intérieur de laquelle circule le fluide à filtrer. C'est, plus particulièrement, une telle membrane qui assure une filtration par écoulement tangentiel d'une partie du fluide au travers de la paroi de cette membrane. Le fluide filtré par une telle membrane, usuellement dénommé perméat, s'écoule hors du carter par le biais d'un conduit d'évacuation acheminant ce perméat en direction d'une cuve de stockage du fluide filtré.

Typiquement, la pression transmembranaire de filtration (PTM) est établie à partir des valeurs des capteurs de pression en entrée du carter de filtration par un premier capteur, en sortie de filtration par un deuxième capteur de pression, et par la pression côté perméat donnée par un troisième capteur.

Le mode de fonctionnement du filtre est le suivant : le fluide à filtrer est alimenté par une pompe d'alimentation vers une boucle de filtration, une fois rempli une pompe de circulation est mise en route pour assurer une circulation du fluide dans la boucle de filtration. La membrane de filtration est placée dans la boucle de filtration. Le perméat de la filtration est recueilli dans une zone dite de perméat reliée à cette membrane de filtration.

Toutefois plusieurs inconvénients apparaissent avec ce type de filtration, tels qu'une augmentation générale de la pression à appliquer à la membrane (qui se colmate au fur et à mesure de la filtration) pour obtenir les mêmes débits de filtration.

Dans ce contexte, la pression transmembranaire de filtration (PTM) est une donnée particulièrement pertinente pour suivre et évaluer la qualité de filtration d'une membrane. Le PTM est donné par la formule suivante :

$$PTM = (PRE + PRS)/2 - PP$$

avec :

PRE : pression rétentat d'entrée ;

PRS : pression rétentat de sortie ; et
PP : pression du perméat.

Ainsi, il est constaté une variabilité des PRE et PRS sur la surface de la membrane dans ce type de filtration, rendant la filtration qualitativement et quantitativement différente tout au long de la surface de la membrane.

Le brevet EP 2598231 propose de limiter ces inconvénients en remplaçant la zone de perméat par un volume de gaz. Ce volume de gaz est apporté à une pression supérieure à la pression rétentat de sortie. La membrane étant étanche au gaz et le gaz se positionnant au-dessus du liquide, la zone de la sortie rétentat est sans flux de perméation. Le brevet EP2598231 permet d'avoir une pression de filtration (PTM) positive sur une partie de la membrane, l'autre partie est préservée et ne filtre pas. Ainsi, la solution donnée par le brevet EP 2598231 ne permet pas d'apporter un gain d'énergie ni d'augmenter le rendement du filtre.

EP0689585 divulgue un procédé de microfiltration à « courant croisé de bière » dans laquelle la filtration est interrompue ponctuellement et la membrane est soumise à un traitement tensio-actif, dissolvant de manière chimique la couche recouvrant la membrane qui est ensuite soumise à un rinçage à contrecourant (dite de type « backwash » en anglais) avec de l'eau. Toutefois, ce procédé empêche d'une part une filtration en continue et, d'autre part, utilise des produits chimiques peu souhaitables.

Le document US9504964B2 divulgue un procédé de filtration pour faire fonctionner un module de filtration avec alimentation en gaz sur son côté perméat pour éviter le reflux du perméat. Toutefois cette solution manque de praticité car elle dépend d'un flux de gaz (préférentiellement inerte pour ne pas altérer les propriétés du fluide).

Les documents EP2730330A1 et US20090120873A1 divulguent des dispositifs de filtrations membranaires comprenant plusieurs circuits de fluides pour contrôler notamment la pression transmembranaire. Ces documents décrivent des dispositifs nécessitant notamment l'utilisation de boucle de fluide filtré, ce qui n'en fait pas des solutions optimales.

Le but de l'invention est donc de pallier les inconvénients de l'art antérieur en proposant un procédé de gestion du colmatage d'une membrane d'un dispositif de filtration tangentielle d'un fluide, le dispositif comprenant :

- une cuve pour fluide à filtrer ;
- un circuit d'alimentation en fluide à filtrer disposé en boucle ;
- une membrane de filtration tangentielle comprise dans la boucle ;
- un moyen de récupération de fluide filtré appelé perméat,
- une première pompe pour faire circuler le fluide à filtrer dans la boucle à une vitesse variable et dans un sens choisi,

- un moyen de fourniture de fluide à filtrer au circuit d'alimentation à partir de la cuve, tel qu'une deuxième pompe ;

- des moyens de détermination de pression compris dans la boucle en entrée et en sortie de membrane,

caractérisé en ce que lors d'une étape de filtration du fluide, la membrane est soumise à une pression de filtration positive sur toute sa surface par un contrôle de la vitesse tangentielle du (seul) fluide à filtrer.

La première pompe pour faire circuler le fluide à filtrer dans la boucle à une vitesse variable et dans un sens choisi, permet ainsi un contrôle de la vitesse tangentielle du fluide à filtrer. Or, il a été découvert que le contrôle de la vitesse tangentielle du fluide à filtrer a une influence directe sur la variabilité de la pression exercée selon la surface de la membrane.

C'est donc bien le contrôle de la vitesse du fluide à filtrer dans la boucle qui détermine la pression sur la membrane et la vitesse du fluide est ainsi aisément contrôlée et les effets sont directs sur la filtration induite. Ceci a un effet direct sur le colmatage de la membrane, ce qui permet donc de gérer ce colmatage.

Ainsi, pour résumer, l'objet de la présente invention concerne un procédé de gestion du colmatage d'une membrane d'un dispositif de filtration tangentielle d'un fluide à filtrer, caractérisé en ce que la membrane est soumise à une pression de filtration positive sur toute sa surface par un contrôle de la vitesse tangentielle du fluide à filtrer.

De manière préférée, le circuit d'alimentation en fluide à filtrer du procédé selon la présente invention est disposé en une seule boucle. En d'autres termes, le circuit d'alimentation en fluide à filtrer est disposé en une seule boucle qui n'est pas inscrite dans d'autres boucles de circulation de ce même fluide.

De manière préférée, la cuve pour fluide à filtrer du procédé selon la présente invention est à pression atmosphérique. Par exemple, la cuve pour fluide à filtrer selon la présente invention présente une ouverture sur l'extérieur.

Dans un mode de réalisation particulier, la cuve pour fluide à filtrer du procédé selon la présente invention est connectée au circuit d'alimentation et n'est pas comprise dans une boucle de circulation de fluide (notamment de fluide à filtrer).

De manière préférée, le fluide à filtrer est un produit issu de l'agriculture tel que du vin ou un précurseur de vin. En effet, les produits viticoles contiennent nombre de produits affectant le colmatage de membranes de filtration. Les produits viticoles, ou plus généralement issus de l'agriculture (dans la production de jus de fruits ou de légumes par exemple), sont donc des produits particulièrement visés par l'objet de la présente invention.

Dans un mode de réalisation particulier, un moyen de détermination de pression du fluide est placé du côté perméat de la membrane. Ainsi, une donnée supplémentaire permet d'optimiser la PTM en contrôlant la vitesse tangentielle du fluide à filtrer.

Tout type de capteur de pression est utilisable en la matière. De manière préférée, les moyens de détermination de pression sont des capteurs de pression tels que des manomètres.

Dans un mode de réalisation particulier, la première pompe maintient une vitesse de circulation de fluide à filtrer dans la boucle suffisante pour assurer que la pression de filtration en sortie de membrane dans la boucle de circulation est supérieure à 0 bars. Ceci diffère particulièrement de ce qui est réalisé dans l'état de la technique connu dans lequel la pression en sortie de membrane est typiquement inférieure à 0 bars, en particulier lorsque la membrane est peu colmatée (par exemple en début de vie ou après un nettoyage de celle-ci).

De manière avantageuse, la pression de filtration en sortie de membrane dans la boucle de circulation est inférieure ou égale à 0,7 bars, préférentiellement inférieure ou égale à 0,5 bars, plus préférentiellement inférieure ou égale à 0,2 bars. Il a en effet été constaté qu'à ces valeurs de pressions, la filtration de la membrane était optimisée.

Dans un mode de réalisation particulier, la première pompe alterne le sens de circulation du fluide à filtrer dans la boucle de circulation. Ceci permet, si besoin, de faire « travailler » la membrane de manière homogène, l'extrémité de sortie du fluide de la membrane devant l'extrémité d'entrée, et vice-et-versa.

Un autre objet selon la présente invention concerne un dispositif de filtration tangentielle d'un fluide comprenant :

- une cuve pour fluide à filtrer ;

- un circuit d'alimentation en fluide à filtrer disposé en boucle ;

- une membrane de filtration tangentielle comprise dans la boucle ;

- un moyen de récupération de fluide filtré appelé perméat,

- une première pompe pour faire circuler le fluide à filtrer dans la boucle,

- un moyen de fourniture de fluide à filtrer au circuit d'alimentation à partir de la cuve, telle qu'une deuxième pompe ;

- des moyens de détermination de pression compris dans la boucle en entrée et en sortie de membrane,

caractérisé en ce que la première pompe est configurée pour fonctionner de manière à fournir une vitesse variable de fluide à filtrer.

Ainsi, la première pompe qui permet de fonctionner de manière à fournir une vitesse variable et donc contrôlable de fluide à filtrer, permet la mise en oeuvre du procédé objet de la présente invention.

De manière préférée, le circuit d'alimentation en fluide à filtrer du dispositif de filtration tangentielle d'un fluide selon la présente invention est disposé en une seule boucle. En d'autres termes, le circuit d'alimentation en fluide à filtrer est disposé en une seule boucle qui n'est pas inscrite dans d'autres boucles de circulation de ce même fluide.

De manière préférée, la cuve pour fluide à filtrer du dispositif de filtration tangentielle d'un fluide selon la présente invention est à pression atmosphérique. Par exemple, la cuve pour fluide à filtrer selon la présente invention présente une ouverture sur l'extérieur.

Dans un mode de réalisation particulier, la cuve pour fluide à filtrer du dispositif de filtration tangentielle d'un fluide selon la présente invention est connectée au circuit d'alimentation et n'est pas comprise dans une boucle de circulation de fluide.

Le circuit d'alimentation en fluide à filtrer disposé en boucle est typiquement alimenté par une pompe d'alimentation. La vitesse de la pompe d'alimentation peut être gérée selon deux modes :

- le premier mode de fonctionnement correspond à une vitesse d'alimentation variable assurant un débit de filtration constant (Q consigne) ;
- le deuxième mode de fonctionnement correspond à une vitesse de pompe d'alimentation variable assurant une pression de filtration constante (PTM consigne).

La pompe d'alimentation est donc configurée pour générer une vitesse de fluide (à filtrer) variable et contrôlée.

De manière avantageuse, un moyen de détermination de pression du fluide est placé du côté perméat de la membrane. Comme évoqué plus haut, ceci permet de générer une donnée supplémentaire pour optimiser la PTM par le contrôle la vitesse tangentielle du fluide à filtrer.

Un autre objet selon la présente invention concerne un procédé de détermination de vitesse tangentielle de fluide à filtrer dans une membrane afin de limiter le colmatage de celle-ci caractérisé en ce qu'il comprend les étapes successives suivantes :

(a) application d'une valeur minimale de vitesse de circulation de fluide à filtrer ;
(b) lecture des pressions dans la boucle de circulation en entrée et en sortie de membrane une fois ces pressions stables à l'échelle de la minute ;
(c) le cas échéant, si la pression de filtration (PTM basse) dans la boucle de circulation en sortie de membrane est inférieure à 0 bars, alors est réalisée une application d'une réduction de vitesse de fluide à filtrer d'un incrément déterminé ;
(d) le cas échéant, si la pression de filtration (PTM basse) dans la boucle de circulation en sortie de membrane est supérieure à 0 bars alors est réalisée une application d'une augmentation de vitesse de fluide à filtrer d'un incrément déterminé ; et
(e) les étapes (b), (c), (d) sont reproduites autant de fois que voulues.

Ainsi comme expliqué ci-dessus, c'est donc bien le contrôle de la vitesse du fluide à filtrer dans la boucle qui détermine la pression sur la membrane et la vitesse du fluide est ainsi aisément contrôlée et les effets sont directs sur la filtration induite. Ceci a un effet direct sur le colmatage de la membrane, ce qui permet donc de le gérer.

Ainsi, le procédé de détermination de vitesse tangentielle de fluide à filtrer dans une membrane tel que décrit ci-dessus afin de limiter le colmatage de la membrane permet également d'optimiser le procédé de gestion du colmatage d'une membrane d'un dispositif de filtration tangentiel d'un fluide.

De manière préférée, la présente invention concerne un procédé de détermination de vitesse tangentielle de fluide à filtrer dans une membrane dans un dispositif de filtration tangentielle selon la présente invention afin de limiter le colmatage de celle-ci caractérisé en ce qu'il comprend les étapes successives suivantes :

(a) application d'une valeur minimale de vitesse de circulation de fluide à filtrer ;
(b) lecture des pressions dans la boucle de circulation en entrée et en sortie de membrane une fois ces pressions stables à l'échelle de la minute ;
(c) le cas échéant, si la pression de filtration (PTM basse) dans la boucle de circulation en sortie de membrane est inférieure à 0 bars, alors est réalisée une application d'une réduction de vitesse de fluide à filtrer d'un incrément déterminé ;
(d) le cas échéant, si la pression de filtration (PTM basse) dans la boucle de circulation en sortie de membrane est supérieure à 0 bars alors est réalisée une application d'une augmentation de vitesse de fluide à filtrer d'un incrément déterminé ; et
(e) les étapes (b), (c), (d) sont reproduites autant de fois que voulues.

Par « échelle de la minute », il est entendu dans le contexte de la présente invention une durée de temps typiquement inférieure ou égale à 10 minutes, telle qu'inférieure ou égale à 9 minutes, inférieure ou égale à 8 minutes, inférieure ou égale à 7 minutes, inférieure ou égale à 6 minutes, inférieure ou égale à 5 minutes, inférieure ou égale à 4 minutes, inférieure ou égale à 3 minutes, inférieure ou égale à 2 minutes ou encore inférieure ou égale à 1 minute.

On décrira ci-après, à titre d'exemples non limitatifs, des formes d'exécution de la présente invention, en référence aux figures annexées sur lesquelles :

[Fig.1] illustre schématiquement une installation pour la filtration tangentielle d'un fluide ;

[Fig.2] illustre le gradient de pression de filtration en mode non-optimisé ;

[Fig.3] représente le gradient de pression de filtration en mode optimisé.

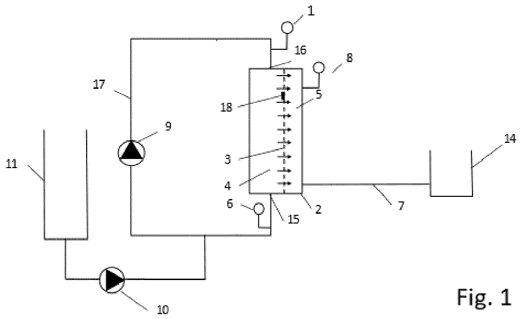

En référence à la figure 1, l'installation comporte, d'une part, une cuve 11 contenant le fluide à filtrer et, d'autre part, un dispositif de filtration alimenté en fluide par ladite cuve sous l'impulsion d'une pompe d'alimentation 10 implantée au niveau d'un conduit d'alimentation raccordant ladite cuve au dispositif de filtration. Ce dispositif de filtration comporte une boucle 17 de circulation du fluide à filtrer, alimentée par le conduit d'alimentation et sur laquelle sont implantés, d'une part, une pompe 9 assurant la circulation du fluide à filtrer dans la boucle 17 et, d'autre part, un moyen de filtration 2 de ce fluide. Un tel moyen de filtration se présente, usuellement, sous la forme d'un carter recevant, intérieurement, au moins une membrane 3 (voire, et de préférence, une pluralité de membranes) à l'intérieur de laquelle circule le fluide à filtrer. C'est, plus particulièrement, une telle membrane qui assure une filtration par écoulement tangentiel d'une partie du fluide au travers de la paroi de cette membrane. Le fluide filtré par une telle membrane, usuellement dénommé perméat 5, s'écoule hors du carter par le biais d'un conduit d'évacuation 7 acheminant ce perméat en direction d'une cuve 14 de stockage du fluide filtré.

Comme expliqué ci-dessus, la pression transmembranaire de filtration (PTM) 18 est établie à partir des valeurs des capteurs de pression en entrée 16 du carter de filtration par le capteur 1, en sortie de filtration 15 (où passe le rétentat 4) par le capteur de pression 6, et par la pression côté perméat 5 donnée par le capteur 8.

Le mode de fonctionnement du filtre est le suivant, le fluide à filtrer est alimenté par la pompe d'alimentation 10 vers la boucle de filtration 17, une fois la boucle de filtration remplie la pompe de circulation 9 est mise en route. La vitesse de la pompe de circulation 9 est constante et ceci quel que soit le produit à filtrer ou le niveau de colmatage du filtre.

La vitesse de la pompe d'alimentation peut être gérée selon deux modes.

Le premier mode de fonctionnement correspond à une vitesse d'alimentation variable assurant un débit de filtration constant (Q consigne). En fonction de l'évolution de colmatage de la membrane 3, la pression de filtration (PTM) va augmenter jusqu'à une pression maximum autorisée par la membrane (PTM consigne).

Le deuxième mode de fonctionnement correspond à une vitesse de pompe d'alimentation variable assurant une pression de filtration constante (PTM consigne). En fonction de l'évolution de colmatage de la membrane 3, le débit de perméation va décroître jusqu'à un débit minimum.

Les différents modes de fonctionnement de l'unité de filtration de l'état de la technique ne proposent pas de tenir comptes du pouvoir colmatant du produit à filtrer. Quelles que soient les conditions de filtration la vitesse de la pompe de circulation 9 est constante et ceci même si le produit à filtrer est peu colmatant et ne nécessite pas une contrainte de cisaillement importante au niveau de la membrane.

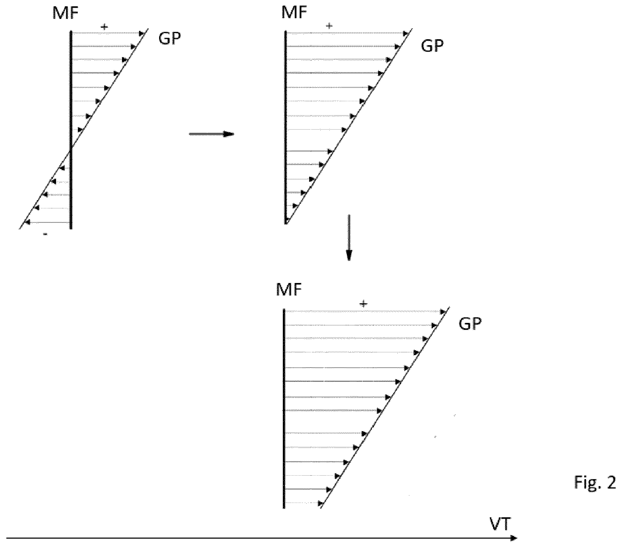

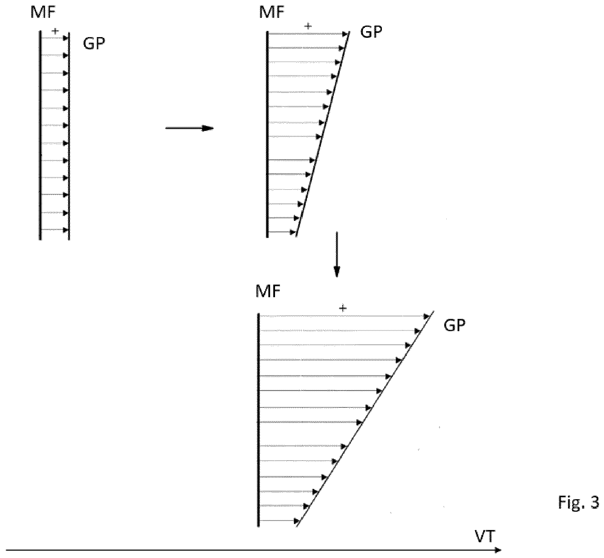

Dans les figures 2 et 3, « VT » représente « Vitesse Tangentielle », « MF » représente « Média Filtrant », « GP » représente « Gradient de Pression », « + » représente les valeurs positives et « - » représente les valeurs négatives.

En référence à la figure 2, le mode de fonctionnement selon l'état de la technique n'est pas optimisé dans le cas de fluide peu colmatant, car la vitesse de la pompe de circulation reste constante tout le long de la filtration. Pour ce type de fluide et un débit de perméation donnée, la pression de filtration (PTM) est très faible. Dans ce cas de figure on peut avoir une perte de charge

(différence de pression entre la sortie de filtration 15 et l'entrée 16 du carter de filtration selon la figure 1) supérieure à la pression de filtration. La conséquence est que seule une partie de la membrane assure un flux du rétentat vers le perméat et qu'une partie de la membrane réalise une filtration du perméat vers le rétentat comme illustré en figure 2.

En figure 3, il peut être vu que la gestion de la vitesse tangentielle dans la boucle de circulation de fluide par l'intermédiaire de la pompe de circulation est réalisée en fonction de la pression de filtration en partie basse de la membrane, afin d'assurer un gradient de pression de filtration toujours positif et mieux réparti sur toute la longueur de la membrane. De ce fait, la filtration commence toujours à une vitesse tangentielle proche de zéro et augmente avec l'évolution de colmatage de la membrane. La vitesse de la pompe de circulation maintient la pression de filtration en partie basse de la membrane à un niveau faiblement positif et constant jusqu'à l'obtention de sa vitesse maximum. Une optimisation de la vitesse tangentielle permet de réaliser des économies d'énergie aussi significatives que le fluide à filtrer est peu colmatant et le niveau de colmatage de la membrane est faible.

**Revendications**

1. Procédé de gestion du colmatage d'une membrane (3) d'un dispositif de filtration tangentielle d'un fluide, le dispositif comprenant :

   - une cuve (11) pour fluide à filtrer ;
   - un circuit d'alimentation en fluide à filtrer disposé en boucle (17) ;
   - une membrane (3) de filtration tangentielle comprise dans la boucle (17) ;
   - un moyen de récupération de fluide filtré appelé perméat (5) ;
   - une première pompe (9) pour faire circuler le fluide à filtrer dans la boucle (17) à une vitesse variable et dans un sens choisi ;

- un moyen de fourniture de fluide à filtrer au circuit d'alimentation à partir de la cuve (11), telle qu'une deuxième pompe (10) ;
- des moyens de détermination de pression compris dans la boucle (17) en entrée et en sortie de membrane (3)

**caractérisé en ce que** lors d'une étape de filtration du fluide, la membrane (3) est soumise à une pression de filtration positive sur toute sa surface par un contrôle de la vitesse tangentielle du seul fluide à filtrer.

2. Procédé selon la revendication 1 **caractérisé en ce que** le fluide à filtrer est un produit issu de l'agriculture tel que du vin ou un précurseur de vin.

3. Procédé selon la revendication 1 ou 2, **caractérisé en ce qu'**un moyen de détermination de pression du fluide à filtrer est placé du côté perméat (5) de la membrane (3).

4. Procédé selon l'une quelconque des revendications précédentes, **caractérisé en ce que** les moyens de détermination de pression sont des capteurs (1,6,8) de pression tels que des manomètres.

5. Procédé selon l'une quelconque des revendications précédentes **caractérisé en ce que** la première pompe (9) maintient une vitesse de circulation de fluide à filtrer dans la boucle (17) de circulation suffisante pour assurer que la pression de filtration en sortie de membrane (3) dans la boucle (17) de circulation est supérieure à 0 bars.

6. Procédé selon la revendication 5, **caractérisé en ce que** la pression de filtration en sortie de membrane (3) dans la boucle (17) de circulation est inférieure ou égale à 0,7 bars, préférentiellement inférieure ou égale à 0,2 bars.

7. Procédé selon l'une quelconque des revendications précédentes **caractérisé en ce que** la première pompe (9) alterne le sens de circulation du fluide à filtrer dans la boucle (17) de circulation.

8. Dispositif de filtration tangentielle d'un fluide comprenant :

   - une cuve (11) pour fluide à filtrer ;
   - un circuit d'alimentation en fluide à filtrer disposé en boucle (17) ;
   - une membrane (3) de filtration tangentielle comprise dans la boucle (17) ;
   - un moyen de récupération de fluide filtré appelé perméat (5) ;
   - une première pompe (9) pour faire circuler le fluide à filtrer dans la boucle (17) ;

- un moyen de fourniture de fluide à filtrer au circuit d'alimentation à partir de la cuve (11), telle qu'une deuxième pompe (10) ;
- des moyens de détermination de pression compris dans la boucle (17) en entrée et en sortie de membrane (3) ;

**caractérisé en ce que** la première pompe (9) est configurée pour fonctionner de manière à fournir une vitesse variable de fluide à filtrer.

9. Dispositif de filtration tangentielle selon la revendication 8, **caractérisé en ce qu'**un moyen de détermination de pression du fluide filtré est placé du côté perméat (5) de la membrane (3).

10. Procédé de détermination de vitesse tangentielle de fluide à filtrer dans une membrane (3) dans un dispositif de filtration tangentielle selon l'une quelconque des revendications 8 ou 9, afin de limiter le colmatage de celle-ci **caractérisé en ce qu'**elle comprend les étapes successives suivantes :

    (a) application d'une valeur minimale de vitesse de circulation de fluide à filtrer;
    (b) lecture des pressions dans la boucle (17) de circulation en entrée et en sortie de membrane (3) une fois ces pressions stables à l'échelle de la minute ;
    (c) le cas échéant, si la pression de filtration dans la boucle (17) de circulation en sortie de membrane (3) est inférieure à 0 bars, alors est réalisée une application d'une réduction de vitesse de fluide à filtrer d'un incrément déterminé ;
    (d) le cas échéant, si la pression de filtration dans la boucle (17) de circulation en sortie de membrane (3) est supérieure à 0 bars, alors est réalisée une application d'une augmentation de vitesse de fluide à filtrer d'un incrément déterminé ; et
    (e) les étapes (b), (c), (d) sont reproduites autant de fois que voulues.

Fig. 1

Fig. 2

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2598231 A
- EP 0689585 A
- US 9504964 B2
- EP 2730330 A1
- US 20090120873 A1